# EUROPÄISCHE PATENTSCHRIFT

(11) **EP 3 710 219 B1**
(45) Veröffentlichungstag und Bekanntmachung des Hinweises auf die Patenterteilung: **15.09.2021**
(21) Anmeldenummer: 18811730.3
(22) Anmeldetag: 15.11.2018
(51) Int. Cl.: B29C 45/14, B29C 33/00

(54) **SPRITZGUSSWERKZEUG**
INJECTION MOLDING MOLD
MOULE POUR MOULAGE PAR INJECTION

(30) Priorität: 16.11.2017 DE 102017127056
(43) Veröffentlichungstag der Anmeldung: 23.09.2020
(73) Patentinhaber: Plan B Engineering Solutions GmbH, 60596 Frankfurt am Main (DE)
(72) Erfinder: KRETZSCHMAR, Kai, 63512 Hainburg (DE)
(74) Vertreter: Habermann Intellectual Property Partnerschaft von Patentanwälten mbB
(86) Internationale Anmeldenummer: PCT/EP2018/081452
(87) Internationale Veröffentlichungsnummer: WO 2019/096941

(56) Entgegenhaltungen:
- DE-A1-102013 107 795
- DE-A1-102015 111 893
- JP-A- H03 199 022
- JP-A- H05 169 489

## Beschreibung

Die Erfindung betrifft ein Spritzgusswerkzeug zur Herstellung eines Kombinationsbauteils aus einem Metallgitter und einem in einem Randbereich des Metallgitters an dem Metallgitter angespritzten Kunststoffelement, wobei in das Spritzgusswerkzeug das Metallgitter zumindest abschnittsweise einlegbar ist, wobei das Spritzgusswerkzeug ein erstes Dichtelement und ein zweites Dichtelement aufweist, wobei das Metallgitter bei bestimmungsgemäßer Verwendung des Spritzgusswerkzeugs in einer Schließposition des Spritzgusswerkzeugs in einem von dem Randbereich des Metallgitters beabstandeten Pressbereich des Metallgitters mittels des ersten Dichtelements gegen das zweite Dichtelement gepresst wird.

Die Kombination verschiedener Werkstoffe zur Herstellung von Kombinationsbauteilen ist ein seit Jahrhunderten bekanntes Verfahren, um gezielt bestimmte Eigenschaften von Bauteilen zu verbessern, oder um unerwünschte Eigenschaften bestimmter Materialien zu kompensieren. Als Beispiel können hierzu eiserne Beschläge auf hölzernen Wagenrädern sowie das verleimen von Horn, Holz und Tiersehnen zu Kompositbögen angesehen werden.

Besondere Bedeutung kommt der Fertigung und Verwendung von Kombinationsbauteilen im modernen Fahrzeugbau zu, da es durch die Verwendung von Kombinationsbauteilen möglich ist, eine Gesamtmasse eines Fahrzeugs zu reduzieren. Typische Kombinationsbauteile sind dabei Gitter, insbesondere Metallgitter, die mittels eines Spritzgussverfahrens in einem Randbereich mit einem Kunststoff umspritzt werden, um so an dem Gitter beispielsweise Festlegemittel anzuordnen.

Zur Herstellung derartiger Bauteile sind bereits unterschiedliche Spritzgusswerkzeuge bekannt. So ist aus der deutschen Offenlegungsschrift DE 19 26 204 A1 ein Rotationsschmelzverfahren zur Herstellung von Formteilen bekannt, bei dem in einer Rotationsform gitterförmige Werkstoffe eingelegt und mit einem Thermoplasten allseitig überzogen werden. Des Weiteren ist aus der deutschen Offenlegungsschrift DE 16 29 485 eine Formvorrichtung zum Herstellen von Kunststoffschaumkörpern aus Polyurethanschaumstoff bekannt, die selbst aus einem Kunststoffschaum, vorzugsweise aus Polyurethan, besteht. Darüber hinaus ist aus der DE 10 2015 111 893 A1 ein Spritzgusswerkzeug zum Herstellen eines Kombinationsbauteils bekannt, mittels dessen ein Metallteil, insbesondere ein Metallgitter, mit einem Kunststoff umspritzbar ist, wobei das Spritzgusswerkzeug zwei Dichteinsätze aus Kunststoff aufweist. Ein derartiges Spritzgusswerkzeug mit zwei elastischen Dichtelementen wird auch in der Druckschrift JP H05 169489 A beschrieben.

Aus den Druckschriften DE 10 2013 107 795 A1 und JP H03 199022 A sind jeweils Spritzgusswerkzeuge bekannt mit denen Textilien umspritzt werden können, wobei die Textilien abschnittsweise in das Spritzgusswerkzeug eingelegt werden. Die Spritzgusswerkzeuge weisen Dichtelemente auf, die in der Schließposition der jeweiligen Spritzgusswerkzeuge an dem eingelegten Textil anliegen.

Der vorliegenden Erfindung liegt die Aufgabe zugrunde ein fortentwickeltes Spritzgusswerkzeug zur Verfügung zu stellen mit dem das Herstellen eines Kombinationsbauteils aus einem Metallgitter und einem in einem Randbereich des Metallgitters angespritzten Kunststoffelement möglich ist.

Diese Aufgabe wird erfindungsgemäß dadurch gelöst, dass das erste Dichtelement eine dem zweiten Dichtelement zugewandte ebene Dichtfläche aufweist, wobei erste Materialeigenschaften des ersten Dichtelements und zweite Materialeigenschaften des zweiten Dichtelements derart aneinander und an das Metallgitter angepasst sind, dass bei bestimmungsgemäßer Verwendung des Spritzgusswerkzeugs in dem Pressbereich Gitterabschnitte des Metallgitters von dem zweiten Dichtelement zumindest abschnittsweise umformt sind, wobei in dem Pressbereich die Gitterabschnitte sowie die Gitterabschnitte umformende Dichtnasen des zweiten Dichtelements mit der ebenen Dichtfläche in Anlage gebracht sind, sodass durch die Dichtelemente und die Gitterabschnitte des Metallgitter der Randbereich vollständig gegenüber einem von dem Randbereich umgebenen Sichtbereich des Metallgitters abgedichtet ist und verhindert ist, dass bei einem Anspritzen des Kunststoffelements ein Kunststoff in den Sichtbereich gelangt. Gegenüber den bekannten Spritzgusswerkzeugen ist eine derartige Ausgestaltung des Spritzgusswerkzeugs besonders vorteilhaft, da bei dem erfindungsgemäßen Spritzgusswerkzeug lediglich eines der Dichtelemente aus einem relativ weichen und plastisch verformbaren Material gefertigt sein muss, wohingegen das jeweils andere Dichtelement aus einem relativ harten Material, beispielsweise einem Werkzeugstahl, einer hochfesten Legierung, insbesondere auf der Basis von Chrom, Titan, Molybdän oder Ähnlichem, einer Keramik oder Ähnlichem hergestellt werden kann. Durch die Verringerung des Anteils an weichen Materialien, inbsbesondere an Kunststoffen, in einem thermisch hoch belasteten Anspritzbereich des Spritzgusswerkzeugs, ist der Verschleiß in diesem Bereich verringert, so dass eine Dauerhaltbarkeit des erfindungsgemäßen Spritzgusswerkzeug erhöht ist.

Es ist erfindungsgemäß vorgesehen, dass das Metallgitter aus einer Vielzahl metallischer Werkstoffe gefertigt sein kann. Das Metallgitter kann beispielsweise aus Aluminium, Kupfer, Eisen oder einem anderen Metall, aber auch aus einer Legierung, beispielsweise Duraluminium, Edelstahl, Bronze oder Ähnlichem gefertigt sein. Es ist auch vorgesehen, dass das Metallgitter lediglich im Wesentlichen aus einem metallischen Werkstoff besteht, beispielsweise indem ein metallischer Werkstoff, beispielsweise Stahldraht, mit einem nicht-metallischen Werkstoff, beispielsweise einem Kunststoff, ummantelt wird. Dem Fachmann sind eine Vielzahl an Ausführungsformen und Kombinationsmöglichkeiten von metallischen und nicht-metallischen Werkstoffen bekannt mittels derer das Metallgitter herstellbar ist.

Eine vorteilhafte Umsetzung des Erfindungsgedankens sieht vor, dass Materialeigenschaften des ersten Dichtmaterials, des zweiten Dichtmaterials sowie des Metallgitters derart aneinander angepasst sind, dass bei einem Höchstanpressdruck keine makroskopische Verformung des ersten Dichtmaterials erfolgt. Das Ausbleiben einer makroskopischen Verformung im Sinne des Erfindungsgedankens meint, dass zwar sehr wohl plastische und elastische Verformungen des ersten Dichtmaterials auftreten können, dass diese jedoch sehr klein bzw. mikroskopisch klein gegenüber einer räumlichen Ausdehnung des ersten Dichtelements sind. Eine mögliche Ausführungsform des erfindungsgemäßen Spritzgusswerkzeugs, die diese Bedingung erfüllt, umfasst ein erstes Dichtelement aus einem Werkzeugstahl und ein zweites Dichtelement aus einem Elastomer, wobei das Metallgitter beispielsweise aus einer Aluminiumlegierung gefertigt sein kann. Dem Fachmann sind eine Vielzahl an Werkstoffkombinationen bekannt, mittels derer bei einem Höchstanpressdruck makroskopische Verformungen im Sinne des Erfindungsgedankens verhindert sind, von denen alle geeignet sind mit dem erfindungsgemäßen Spritzgusswerkzeug verwendet zu werden.

Um eine makroskopische Verformung des ersten Dichtelements des Spritzgusswerkzeug wirksam zu verhindern, ist bei der Erfindung vorgesehen, dass die Verformung des ersten Dichtmaterials bei einem Höchstanpressdruck weniger als 1/10 vorzugsweise weniger als 1/50 und besonders vorzugsweise weniger als 1/100 der Verformung des zweiten Dichtmaterials beträgt. Bei der Bestimmung der Verformung des ersten und des zweiten Dichtelements ist zu beachten, dass Material und Struktur des Metallgitters hierauf großen Einfluss haben. Je härter und/ oder zäher das mit dem erfindungsgemäßen Spritzgusswerkzeug zu umspritzende Metallgitter ist und je größer der Höchstanpressdruck ist, umso härter und/ oder zäher muss auch das erste Dichtelement sein. Aufgrund der Vielzahl an verfügbaren metallischen und nicht-metallischen Werkstoffen ist es dem Fachmann ohne weiteres möglich, eine an ein zu umspritzendes Metallgitter angepasste Kombination aus geeigneten Dichtmaterialien für das erste und das zweite Dichtelement auszuwählen.

Um eine besonders hohe Dauerhaltbarkeit des Spritzgusswerkzeugs zu erreichen, sieht eine besonders vorteilhafte Umsetzung des Erfindungsgedankens vor, dass das erste Dichtelements bei einem Höchstanpressdruck eine gleiche oder höhere Härte aufweist als das Metallgitter, wobei das zweite Dichtelement bei dem Höchstanpressdruck eine geringere Härte aufweist, als das Metallgitter, sodass bei einem Umformen des Metallgitters durch das zweite Dichtelement eine plastische Verformung des ersten Dichtelements verhindert ist. Für die Auswahl der verwendeten Materialien für das erste Dichtelement, das zweite Dichtelement sowie das Metallgitter bedeutet das, dass die Fließgrenze des ersten Dichtelements höher liegen muss, als in Abhängigkeit vom Höchstanpressdruck lokal auf das erste Dichtelement einwirkende Druckspannungsspitzen. Ein auf das erste Dichtelement lokal einwirkender Druck ist auch abhängig von den Materialeigenschaften des zweiten Dichtelements. Je weicher und/ oder verformbarer das zweite Dichtelement ist, umso geringer fallen die auf das erste Dichtelement einwirkenden Druckspannungen aus. Dem Fachmann sind eine Vielzahl an geeigneten Materialien bekannt, mittels derer sowohl die erfindungsgemäß geforderte wechselwirkende Einwirkung der Dichtelemente und des Metallgitters aufeinander, als auch die für eine Durchführung eines Spritzgussverfahrens notwendige Abdichtung des erfindungsgemäßen Spritzgusswerkzeuges erreichbar ist.

Eine vorteilhafte Umsetzung des Erfindungsgedankens sieht vor, dass das erste Dichtelement aus einem metallischen, einem keramischen oder einem metall-keramischen Werkstoff hergestellt ist. Dem Fachmann ist eine Vielzahl an metallischen Werkstoffen bekannt, die sich nach chemischer Zusammensetzung, Herstellungsverfahren und einem gegebenenfalls angewendeten Vergütungsverfahren unterscheiden, wobei eine Vielzahl an metallischen Werkstoffen dazu geeignet ist mit dem erfindungsgemäßen Spritzgusswerkzeug verwendet zu werden.

Keramische Werkstoffe zeichnen sich durch eine hohe Härte aus, wobei diese in der Regel spröder sind als metallische Werkstoffe. Nichtsdestotrotz sind dem Fachmann eine Vielzahl an keramischen Werkstoffen bekannt, die zur Verwendung mit dem erfindungsgemäßen Spritzgusswerkzeug geeignet sind, beispielsweise sogenannte Metall-Matrix-Komposite, bei denen in eine Metallmatrix Keramikpartikel eingelagert sind.

Um eine gute Anpassung des zweiten Dichtelements an das Metallgitter und das erste Dichtelement zu erreichen, ist es erfindungsgemäß vorgesehen, dass das zweite Dichtelement aus einem Elastomer hergestellt ist. Um die notwendige Dichtwirkung zur Durchführung des Spritzgussverfahrens zu erreichen, ist es vorgesehen, dass das zweite Dichtelement ausreichend weich und verformbar ist, um das Metallgitters zu umformen. Je engmaschiger das Metallgitter ist, umso weicher und verformbarer muss das Dichtmaterial des zweiten Dichtelements sein. Aus dem Stand der Technik sind zahlreiche Elastomere insbesondere auch temperaturbeständige Elastomere bekannt, die dazu geeignet sind, als Material für ein Dichtelement des erfindungsgemäßen Spritzgusswerkzeugs verwendet zu werden.

Eine vorteilhafte Ausgestaltung des Erfindungsgedankens sieht vor, dass das zweite Dichtelement aus einem Polyurethan-basierten Kunststoffmaterial gebildet ist. Auf der Basis von Polyurethan sind eine Vielzahl an unterschiedlichen Kunststoffen herstellbar, insbesondere auch Kunststoffe mit einer Einsatztemperatur von mehr als 100°C. Eine hohe Temperaturbeständigkeit ist Voraussetzung dafür, dass das Kunststoffmaterial in dem erfindungsgemäßen Spritzgusswerkzeug verwendbar ist. Aus dem Stand der Technik sind zahlreiche Polyurethan-basierte Kunststoffmaterialien bekannt, die diese Anforderungen erfüllen und dazu geeignet sind, als Material für das zweite Dichtelement des Spritzgusswerkzeugs verwendet zu werden.

Eine vorteilhafte Ausgestaltung des Erfindungsgedankens sieht vor, dass das Spritzgusswerkzeug zumindest ein Positionierungsmittel aufweist, wobei mittels des Positionierungsmittels bei einem Überführen des Spritzgusswerkzeugs von einer Öffnungsposition in die Schließposition das Metallgitter innerhalb des Spritzgusswerkzeugs derart positioniert wird, dass die bestimmungsgemäße Verwendung des Spritzgusswerkzeugs ermöglicht ist. Zur Durchführung eines erfolgreichen Spritzgussvorgangs in dem erfindungsgemäßen Spritzgusswerkzeug ist es erforderlich, dass das Metallgitter in einer vor dem Spritzgussvorgang zu definierenden Position in Relation zu dem Spritzgusswerkzeug angeordnet ist. Als Positionierungsmittel können vorteilhafterweise Kerben, Anschläge, Nasen, Vorsprünge oder Ähnliches verwendet werden.

Eine vorteilhafte Umsetzung des Erfindungsgedankens sieht vor, dass das Positionierungsmittel einen Dorn aufweist, wobei das Metallgitter bei bestimmungsgemäßer Verwendung des Spritzgusswerkzeugs von dem Dorn zumindest abschnittsweise durchdrungen ist, wenn das Spritzgusswerkzeug in die Schließposition überführt ist. Es ist vorgesehen, dass der Dorn derart an das Metallgitter angepasst ist, dass ein Verlagerung des Metallgitters bei in die Schließposition überführtem Spritzgusswerkzeug zumindest minimiert, bevorzug verhindert ist.

Um eine gleichbleibende Qualität bei dem Spritzgussvorgang zu erreichen, ist es auch möglich und erfindungsgemäß vorgesehen, dass durch das Positionierungsmittel, insbesondere auch das als Dorn ausgestaltete Positionierungsmittel, eine Position des Metallgitters in dem Spritzgusswerkzeug vorgegeben ist, sodass ein Bediener des Spritzgusswerkzeugs das Metallgitter nur in der vorgegebenen Position in dem Spritzgusswerkzeug anordnen kann und durch das Positionierungsmittel auf diese Weise auch eine Fehlpositionierung des Metallgitters erreicht werden kann.

Um das Spritzgusswerkzeug an eine Vielzahl von Metallgitter anpassen zu können, ist es erfindungsgemäß auch vorgesehen, dass das erste Dichtelement und/ oder das zweite Dichtelement lösbar an dem Spritzgusswerkzeug festgelegt sind, sodass ein Austausch des ersten Dichtelements und/ oder des zweiten Dichtelements ermöglicht ist. Eine derartige Ausgestaltung des erfindungsgemäßen Spritzgusswerkzeugs ermöglicht es, dass die Dichtelemente in Abhängigkeit von Eigenschaften des Metallgitters angepasst werden können sowie, dass verschlissene Dichtelemente ausgetauscht werden können, ohne dass das gesamte Spritzgusswerkzeug ersetzt werden muss.

Weitere vorteilhafte Ausgestaltungen des erfindungsgemäßen Spritzgusswerkzeugs sind anhand von in der Zeichnung dargestellten Ausführungsbeispielen näher erläutert.

Es zeigt:
Figur 1 eine schematisch dargestellte Schnittansicht eines erfindungsgemäßen Spritzgusswerkzeugs und
Figur 2 eine ausschnittsweise vergrößert dargestellte Schnittansicht eines erfindungsgemäßen Spritzgusswerkzeugs.

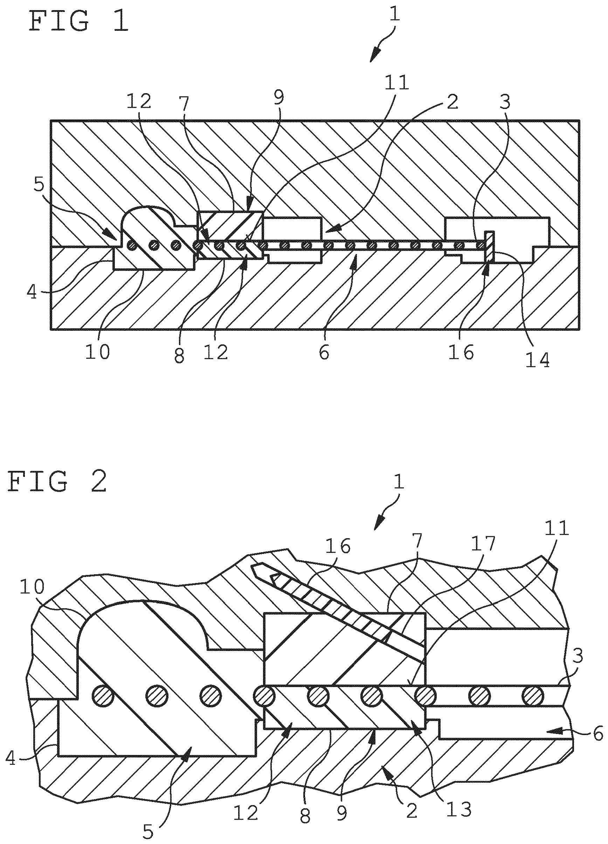

In Figur 1 ist eine schematische dargestellte Schnittansicht eines erfindungsgemäßen Spritzgusswerkzeugs 1 gezeigt. Mittels des Spritzgusswerkzeugs 1 ist ein Kombinationsbauteil 2 aus einem Metallgitter 3 und einem in einem Randbereich des Metallgitters 3 an dem Metallgitter 3 angespritzten Kunststoffelement 4 herstellbar. Bei der dargestellten Ausführungsform des Spritzgusswerkzeugs 1 wird das Metallgitter 3 zu einem Anspritzen des Kunststoffelements 4 vollständig in das Spritzgusswerkzeug 1 eingelegt. Um den Randbereich 5 des Metallgitters 3 gegenüber einem Sichtbereich 6 des Metallgitters 3 abzudichten, weist das Spritzgusswerkzeug 1 ein erstes Dichtelement 7 und ein zweites Dichtelement 8 auf. Um das Kunststoffelement 4 anspritzen zu können, befindet sich das gezeigte Spritzgusswerkzeug 1 in einer Schließposition. In dieser Position des Spritzgusswerkzeugs 1 wird in einem von dem Randbereich 5 des Metallgitters 3 beabstandeten Pressbereich 9 des Metallgitters 3 das Metallgitter 3 mittels des ersten Dichtelements 7 gegen das zweite Dichtelement 8 gepresst, wobei ein Spritzraum 10 des Spritzgusswerkzeugs 1 derart abgedichtet ist, dass mittels eines Spritzgussverfahrens ein verflüssigter und unter Druck stehender Kunststoff in den Spritzraum 10 eingebracht werden kann.

Bei dem erfindungsgemäßen Spritzgusswerkzeug 1 weist das erste Dichtelement 7 eine dem zweiten Dichtelement 8 zugewandte ebene Dichtfläche 11 auf. Die Materialeigenschaften der Dichtelement 7, 8 sind derart aneinander und an das Metallgitter 3 angepasst, dass in dem Pressbereich 9 Gitterabschnitte 12 des Metallgitters 3 von dem zweiten Dichtelement 8 abschnittsweise umformt sind und durch das zweite Dichtelement 8 in dem Pressbereich 9 Dichtnasen 13 gebildet sind. Die Gitterabschnitte 12 sowie die Dichtnasen 13 sind mit der Dichtfläche 11 in Anlage gebracht, wodurch die Dichtelemente 7, 8 des gezeigten erfindungsgemäßen Spritzgusswerkzeugs 1 im Zusammenspiel mit dem Metallgitter 3 eine notwendige Dichtwirkung entfalten, sodass der Randbereich 5 vollständig gegenüber dem von dem Randbereich 5 umgebenen Sichtbereich 6 des Metallgitters 3 abgedichtet ist und verhindert ist, dass während des Spritzvorgangs Kunststoff in den Sichtbereich 6 gelangt.

Das erste Dichtelement 7 des gezeigten Spritzgusswerkzeugs 1 ist aus einem Werkzeugstahl gefertigt, wobei das zweite Dichtelement 8 aus einem temperaturbeständigen Elastomer gefertigt ist. Das Metallgitter 3 ist aus einer Aluminiumlegierung gefertigt. Durch eine derartige Auswahl der Werkstoffe für die Dichtelement 7, 8 und das zu bearbeitende Metallgitter 3 ist sichergestellt, dass Materialeigenschaften des ersten Dichtelements 7, des zweiten Dichtelements 8 sowie des Metallgitters 3 derart aneinander angepasst sind, dass bei einem Höchstanpressdruck keine makroskopische Verformung des ersten Dichtelements 8 erfolgt.

Die dargestellte Ausführungsform des erfindungsgemäßen Spritzgusswerkzeugs 1 weist ein als Anschlagsleiste ausgebildetes Positionierungsmittel 14 auf, das bei einem Überführen des Spritzgusswerkzeugs 1 von einer Öffnungsposition in die Schließposition das Metallgitter 3 entsprechend verfahrenstechnischer Vorgaben und Notwendigkeiten innerhalb des Spritzgusswerkzeugs 1 positioniert. Das Positionierungsmittel 14 des dargestellten Spritzgusswerkzeugs 1 ist innerhalb eines Positionierungsbereichs 15 verlagerbar, so dass mit dem Spritzgusswerkzeug 1 Metallgitter 3 unterschiedlicher Größen verarbeitbar sind.

In Figur 2 ist eine ausschnittsweise vergrößerte Schnittansicht des Spritzgusswerkzeugs 1 gezeigt. Die Dichtelemente 7 ,8 des dargestellten Spritzgusswerkzeugs 1 sind mittels als Schrauben ausgebildeter Dichtungsfestlegemittel 16 lösbar an dem Spritzgusswerkzeug 1 festgelegt. Durch eine derartige Ausgestaltung des Spritzgusswerkzeugs 1 wird es ermöglicht, dass die Dichtelemente 7, 8 nach Bedarf, oder wenn sie verschlissen sind, ausgetauscht werden können. Bei der dargestellten Ausführungsform des erfindungsgemäßen Spritzgusswerkzeugs 1 ist das Dichtungsfestlegemittel 16 als eine in einer das erste Dichtelement 7 durchdringenden Bohrung 17 angeordnete Wurmschraube ausgebildet.

### BEZUGSZEICHENLISTE

- 1.: Spritzgusswerkzeug
- 2.: Kombinationsbauteil
- 3.: Metallgitter
- 4.: Kunststoffelement
- 5.: Randbereich
- 6.: Sichtbereich
- 7.: erstes Dichtelement
- 8.: zweites Dichtelement
- 9.: Pressbereich
- 10.: Spritzraum
- 11.: Dichtfläche
- 12.: Gitterabschnitte
- 13.: Dichtnasen
- 14.: Positionierungsmittel
- 15.: Positionierungsbereich
- 16.: Dichtungsfestlegemittel
- 17.: Bohrung

## Patentansprüche

1. Spritzgusswerkzeug (1) zur Herstellung eines Kombinationsbauteils (2) aus einem Metallgitter (3) und einem in einem Randbereich (5) des Metallgitters (3) an dem Metallgitter (3) angespritzten Kunststoffelement (4), wobei in das Spritzgusswerkzeug (1) das Metallgitter (3) zumindest abschnittsweise einlegbar ist, wobei das Spritzgusswerkzeug (1) ein erstes Dichtelement (7) und ein zweites Dichtelement (8) aufweist, wobei das Metallgitter (3) bei bestimmungsgemäßer Verwendung des Spritzgusswerkzeugs (1) in einer Schließposition des Spritzgusswerkzeugs (1) in einem von dem Randbereich (5) des Metallgitters (3) beabstandeten Pressbereich (9) des Metallgitters (3) mittels des ersten Dichtelements (7) gegen das zweite Dichtelement gepresst wird, **dadurch gekennzeichnet, dass** das erste Dichtelement eine dem zweiten Dichtelement zugewandte ebene Dichtfläche (11) aufweist, wobei erste Materialeigenschaften des ersten Dichtelements (7) und zweite Materialeigenschaften des zweiten Dichtelements (8) derart aneinander und an das Metallgitter (3) angepasst sind, dass bei bestimmungsgemäßer Verwendung des Spritzgusswerkzeugs (1) in dem Pressbereich (9) Gitterabschnitte (12) des Metallgitters (3) von dem zweiten Dichtelement zumindest abschnittsweise umformt sind, wobei in dem Pressbereich (9) die Gitterabschnitte (12) sowie die Gitterabschnitte (12) umformende Dichtnasen (13) des zweiten Dichtelements (8) mit der ebenen Dichtfläche (11) in Anlage gebracht sind, sodass durch die Dichtelemente und die Gitterabschnitte (12) des Metallgitter (3) der Randbereich (5) vollständig gegenüber einem von dem Randbereich (5) umgebenen Sichtbereich (6) des Metallgitters (3) abgedichtet ist und verhindert ist, dass bei einem Anspritzen des Kunststoffelements (4) ein Kunststoff in den Sichtbereich (6) gelangt.

2. Spritzgusswerkzeug (1) nach Anspruch 1, **dadurch gekennzeichnet, dass** Materialeigenschaften des ersten Dichtmaterials, des zweiten Dichtmaterials sowie des Metallgitters (3) derart aneinander angepasst sind, dass bei einem Höchstanpressdruck keine makroskopische Verformung des ersten Dichtmaterials erfolgt.

3. Spritzgusswerkzeug (1) nach einem der Ansprüche 1 oder 2, **dadurch gekennzeichnet, dass** die Verformung des ersten Dichtmaterials bei einem Höchstanpressdruck weniger als 1/10 vorzugsweise weniger als 1/50 und besonders vorzugsweise weniger als 1/100 der Verformung des zweiten Dichtmaterials beträgt.

4. Spritzgusswerkzeug (1) nach einem der Ansprüche 1 bis 3, **dadurch gekennzeichnet, dass** das erste Dichtelement bei einem Höchstanpressdruck eine gleiche oder höhere Härte aufweist als das Metallgitter (3), wobei das zweite Dichtelement bei dem Höchstanpressdruck eine geringere Härte aufweist, als das Metallgitter (3), sodass bei einem Umformen des Metallgitters (3) durch das zweite Dichtelement eine plastische Verformung des ersten Dichtelements (7) verhindert ist.

5. Spritzgusswerkzeug (1) nach einem der Ansprüche 1 bis 4, **dadurch gekennzeichnet, dass** das erste Dichtelement aus einem metallischen, einem keramischen oder einem metall-keramischen Werkstoff hergestellt ist.

6. Spritzgusswerkzeug (1) nach einem der Ansprüche 1 bis 5, **dadurch gekennzeichnet, dass** das zweite Dichtelement aus einem Elastomer hergestellt ist.

7. Spritzgusswerkzeug (1) nach Anspruch 6, **dadurch gekennzeichnet, dass** das zweite Dichtelement aus einem Polyurethan-basierten Kunststoffmaterial gebildet ist.

8. Spritzgusswerkzeug (1) nach einem der Ansprüche 1 bis 7, **dadurch gekennzeichnet, dass** das Spritzgusswerkzeug (1) zumindest ein Positionierungsmittel (14) aufweist, wobei mittels des Positionierungsmittels (14) bei einem Überführen des Spritzgusswerkzeugs (1) von einer Öffnungsposition in die Schließposition das Metallgitter (3) innerhalb des Spritzgusswerkzeugs (1) derart positioniert wird, dass die bestimmungsgemäße Verwendung des Spritzgusswerkzeugs (1) ermöglicht ist.

9. Spritzgusswerkzeug (1) nach Anspruch 8, **dadurch gekennzeichnet, dass** das Positionierungsmittel (14) einen Dorn aufweist, wobei das Metallgitter (3) bei bestimmungsgemäßer Verwendung des Spritzgusswerkzeugs (1) von dem Dorn zumindest abschnittsweise durchdrungen ist, wenn das Spritzgusswerkzeug (1) in die Schließposition überführt ist.

10. Spritzgusswerkzeug (1) nach einem der Ansprüche 1 bis 9, **dadurch gekennzeichnet, dass** das erste Dichtelement und/ oder das zweite Dichtelement lösbar an dem Spritzgusswerkzeug (1) festgelegt sind, sodass ein Austausch des ersten Dichtelements (7) und/ oder des zweiten Dichtelements (8) ermöglicht ist.

## Claims

1. Injection mould (1) for producing a combined component (2) formed of a metal grid (3) and a plastics-material element (4) moulded onto the metal grid (3) in an edge region (5) of the metal grid (3), wherein the metal grid (3) can be inserted at least sectionally in the injection mould (1), wherein the injection mould (1) comprises a first sealing element (7) and a second sealing element (8), wherein the metal grid (3), when the injection mould (1) is used as intended, in a closed position of the injection mould (1) in a pressing region (9) of the metal grid (3) which is at a distance from the edge region (5) of the metal grid (3), is pressed against the second sealing element by means of the first sealing element (7), **characterised in that** the first sealing element comprises a flat sealing face (11) which faces the second sealing element, wherein first material properties of the first sealing element (7) and second material properties of the second sealing element (8) are matched to each other and to the metal grid (3) such that, when the injection mould (1) is used as intended, in the pressing region (9) grid portions (12) of the metal grid (3) are surrounded at least sectionally by the second sealing element, wherein in the pressing region (9) the grid portions (12) and also sealing projections (13) of the second sealing element (8) surrounding the grid portions (12) are brought into abutment with the flat sealing face (11), so that by the sealing elements and the grid portions (12) of the metal grid (3) the edge region (5) is sealed off completely in relation to a visible area (6) of the metal grid (3) which is surrounded by the edge region (5), and plastics material is prevented from reaching the visible area (6) when the plastics-material element (4) is being moulded-on.

2. Injection mould (1) according to claim 1, **characterised in that** material properties of the first sealing material, the second sealing material and also of the metal grid (3) are matched to each other such that at a maximum contact pressure no macroscopic deformation of the first sealing material takes place.

3. Injection mould (1) according to one of claims 1 or 2, **characterised in that** the deformation of the first sealing material at a maximum contact pressure is less than 1/10, preferably less than 1/50, and particularly preferably less than 1/100 of the deformation of the second sealing material.

4. Injection mould (1) according to one of claims 1 to 3, **characterised in that** the first sealing element at a maximum contact pressure has an identical hardness to or greater hardness than the metal grid (3), wherein the second sealing element at the maximum contact pressure has a lower hardness than the metal grid (3), so that upon surrounding of the metal grid (3) by the second sealing element plastic deformation of the first sealing element (7) is prevented.

5. Injection mould (1) according to one of claims 1 to 4, **characterised in that** the first sealing element is produced from a metallic, a ceramic or a metal-ceramic material.

6. Injection mould (1) according to one of claims 1 to 5, **characterised in that** the second sealing element is produced from an elastomer.

7. Injection mould (1) according to claim 6, **characterised in that** the second sealing element is formed from a polyurethane-based plastics material.

8. Injection mould (1) according to one of claims 1 to 7, **characterised in that** the injection mould (1) comprises at least one positioning means (14), wherein by means of the positioning means (14) upon transferring the injection mould (1) from an open position into the closed position the metal grid (3) is positioned within the injection mould (1) such that use of the injection mould (1) as intended is made possible.

9. Injection mould (1) according to claim 8, **characterised in that** the positioning means (14) comprises a mandrel, wherein the metal grid (3), when the injection mould (1) is used as intended, is penetrated at least sectionally by the mandrel if the injection mould (1) is transferred into the closed position.

10. Injection mould (1) according to one of claims 1 to 9, **characterised in that** the first sealing element and/or the second sealing element is/are secured detachably to the injection mould (1), so that exchange of the first sealing element (7) and/or of the second sealing element (8) is made possible.

## Revendications

1. Moule pour moulage par injection (1) destiné à fabriquer une pièce structurale combinée (2) à partir d'un treillis métallique (3) et d'un élément en matière plastique (4) moulé sur le treillis métallique (3) dans une zone de bord (5) du treillis métallique (3), le treillis métallique (3) pouvant être déposé au moins en partie dans le moule pour moulage par injection (1), le moule pour moulage par injection (1) comportant un premier élément d'étanchéité (7) et un second élément d'étanchéité (8), le treillis métallique (3) étant pressé, lors d'une utilisation normale du moule pour moulage par injection (1), dans une position de fermeture du moule pour moulage par injection (1), contre le second élément d'étanchéité au moyen du premier élément d'étanchéité (7), dans une zone de pressage (9) du treillis métallique (3), espacée de la zone de bord (5) du treillis métallique (3), **caractérisé en ce que** le premier élément d'étanchéité comporte une surface d'étanchéité (11) plane orientée vers le second élément d'étanchéité, des premières propriétés de matériau du premier élément d'étanchéité (7) et des secondes propriétés de matériau du second élément d'étanchéité (8) étant adaptées les unes aux autres et au treillis métallique (3) de telle manière que, lors d'une utilisation normale du moule pour moulage par injection (1), des parties de treillis (12) du treillis métallique (3) sont entourées, au moins en partie, dans la zone de pressage (9) par le second élément d'étanchéité, les parties de treillis (12) ainsi que les saillies d'étanchéité (13) du second élément d'étanchéité (8) entourant les parties de treillis (12) étant appliquées contre la surface d'étanchéité (11) plane dans la zone de pressage (9), de telle sorte que, par les éléments d'étanchéité et les parties de treillis (12) du treillis métallique (3), la zone de bord (5) est rendue entièrement étanche par rapport à une zone de visibilité (6) du treillis métallique (3) entourée de la zone de bord (5) et qu'une pénétration d'une matière plastique dans la zone de visibilité (6) est empêchée lors l'élément en matière plastique (4) est moulé.

2. Moule pour moulage par injection (1) selon la revendication 1, **caractérisé en ce que** des propriétés de matériau du premier matériau d'étanchéité, du second matériau d'étanchéité ainsi que du treillis métallique (3) sont adaptées les unes aux autres de telle manière que, à une pression de contact maximale, aucune déformation macroscopique du premier matériau d'étanchéité n'a lieu.

3. Moule pour moulage par injection (1) selon l'une des revendications 1 ou 2, **caractérisé en ce que** la déformation du premier matériau d'étanchéité représente, à une pression de contact maximale, moins de 1/10, de préférence moins de 1/50 et de manière particulièrement préférée moins de 1/100 de la déformation du second matériau d'étanchéité.

4. Moule pour moulage par injection (1) selon l'une des revendications 1 à 3, **caractérisé en ce que** le premier élément d'étanchéité présente, à une pression de contact maximale, une dureté égale ou supérieure au treillis métallique (3), le second élément d'étanchéité présentant, à la pression de contact maximale, une dureté inférieure au treillis métallique (3), de telle sorte que, lors le treillis métallique (3) est entouré par le second élément d'étanchéité, une déformation plastique du premier élément d'étanchéité (7) est empêchée.

5. Moule pour moulage par injection (1) selon l'une des revendications 1 à 4, **caractérisé en ce que** le premier élément d'étanchéité est fabriqué à partir d'une matière métallique, céramique ou métallo-céramique.

6. Moule pour moulage par injection (1) selon l'une des revendications 1 à 5, **caractérisé en ce que** le second élément d'étanchéité est fabriqué à partir d'un élastomère.

7. Moule pour moulage par injection (1) selon la revendication 6, **caractérisé en ce que** le second élément d'étanchéité est constitué par une matière plastique à base de polyuréthane.

8. Moule pour moulage par injection (1) selon l'une des revendications 1 à 7, **caractérisé en ce que** le moule pour moulage par injection (1) comporte au moins un moyen de positionnement (14), le treillis métallique (3) étant, lors d'un transfert du moule pour moulage par injection (1) d'une position d'ouverture à la position de fermeture, positionné à l'intérieur du moule pour moulage par injection (1) au moyen du moyen de positionnement (14) de telle manière que l'utilisation normale du moule pour moulage par injection (1) est rendue possible.

9. Moule pour moulage par injection (1) selon la revendication 8, **caractérisé en ce que** le moyen de positionnement (14) comporte un mandrin, le treillis métallique (3) étant, lors de l'utilisation conforme du moule pour moulage par injection (1), traversé au moins sur certaines parties par le mandrin, quand le moule pour moulage par injection (1) soit transféré dans la position de fermeture.

10. Moule pour moulage par injection (1) selon l'une des revendications 1 à 9, **caractérisé en ce que** le premier élément d'étanchéité et/ou le second élément d'étanchéité sont fixés de manière détachable au moule pour moulage par injection (1), de telle sorte qu'un remplacement du premier élément d'étanchéité (7) et/ou du second élément d'étanchéité (8) est rendu possible.
